# EUROPEAN PATENT APPLICATION

(11) **EP 4 575 807 A1**
(43) Date of publication of application: **25.06.2025**
(21) Application number: 23383348.2
(22) Date of filing: 21.12.2023
(51) Int. Cl.: G06F 12/0811, G06F 12/0862

(54) **PERCEPTRON-BASED OFF-CHIP PREDICTOR**

(71) Applicant: Barcelona Supercomputing Center-Centro Nacional de Supercomputación, 08034 Barcelona (ES)
(72) Inventor: JAMET, Alexandre Valentin, 08034 Barcelona (ES); VAVOULIOTIS, Georgios, 08034 Barcelona (ES); CASAS, Marc, 08034 Barcelona (ES)
(74) Representative: TRBL Intellectual Property

(57) **Abstract**

The present invention relates to a first-level perceptron (FLP) off-chip predictor communicatively connectable to a computing core and to a DRAM, wherein the core and the DRAM are communicatively connected through a multi-level cache hierarchy of levels L1D, L2C, ..., LLC. The FLP is advantageously adapted with an FLP off-chip prediction mechanism comprising two thresholds, *T_{low}* and *T_{high}.* The invention also relates to a two-level perceptron (TLP) off-chip predictor comprising a first-level perceptron (FLP) off-chip predictor according to any of the preceding claims; and a second-level perceptron (SLP) off-chip predictor communicatively connectable to a multi-level cache hierarchy of levels L1D, L2C, ..., LLC through a L1D prefetcher, wherein the multi-level cache hierarchy is communicatively connected to a computing core and to a DRAM.

## Description

### FIELD OF THE INVENTION

The present invention relates to the field of computer science and, particularly, to the microarchitecture of central processing units (CPUs), cache hierarchy and prefetching. More specifically, the invention relates to a perceptron-based predictor which improves the performance of memory-intensive workloads, by reducing the triggering of accesses to dynamic random-access memories (DRAMs).

### BACKGROUND OF THE INVENTION

Emerging workloads from various computing domains have large data footprints, which are orders of magnitude larger than the capacity of current cache hierarchies. These workloads frequently trigger DRAM accesses, spending a substantial portion of their execution time waiting for data transfers to/from DRAM to complete, with a detrimental effect on performance and energy. In the prior art, various techniques to mitigate the performance and energy overheads of these applications have been proposed, and can be broadly classified into four categories:
i) Off-chip prediction schemes that predict whether a memory access will result in a DRAM access or hit in the cache hierarchy.
ii) Data prefetching with adaptive filters, configured to ensure that only correct prefetches will be issued.
iii) Cache bypassing configured to avoid caching blocks that will not be referenced in a given period of time.
iv) Specific cache designs and optimizations for specific workload types.

Despite their potential for determining the location of requested data in the memory hierarchy, the known off-chip predictors have important drawbacks that not only limit the performance of the memory subsystem, but also hinder their implementation in real-world designs. For example, some prior-art off-chip predictors trigger two memory accesses, one to DRAM and a second regular request to the cache hierarchy, when it is predicted that the corresponding load access will be served from DRAM. While this approach can potentially reduce the latency of a load request being served from DRAM, it may also significantly increase the number of DRAM transactions. This issue is a critical aspect on bandwidth-constrained scenarios since a large fraction of the inaccurate off-chip predictions is served by the first level data cache (L1D). However, constantly delaying the off-chip predictions until the L1D lookup is completed would result in suboptimal performance gains since a substantial portion of the off-chip predictions are accurate. Therefore, finding a microarchitectural scheme that selectively delays the off-chip predictions with modest confidence, until the L1D lookup is resolved, has the potential to significantly reduce the number of useless DRAM transactions and deliver higher performance.

For instance, the research thesis study *"*Evaluation of L1 residence for perceptron filter enhanced signature path prefetcher" (A. Staggs, Undergraduate Research Scholars program by the Texas A&M University, May 2020) describes various integrated circuit technologies and multi-level caches. In that context, the study proposes evaluating the effect of an L1D residence for a Perceptron-Filtered Signature Path Prefetcher (PPF) concluding that, while an unoptimized movement of the PPF from the level-two cache (L2C) to the L1D shows performance degradation, optimizations such as using the L1D data stream to prefetch to all cache levels, and updating table sizes and lengths, can match a scenario where PPF is located alongside the L2C.

The article *"*Hermes: Accelerating Long-Latency Load Requests via Perceptron-Based Off-Chip Load Prediction" (R. Bera et al., arXiv:2209.00188v3 [cs.AR], 30 September 2023) describes a lightweight, perceptron-based off-chip load predictor, that learns to identify off-chip load requests using multiple program features (e.g., sequence of program counters, byte off set of a load request). For every load request generated by the processor, the predictor observes a set of program features to predict whether the load would go off chip. If the load is predicted to go off chip, then the predictor issues a speculative load request, directly to the main memory controller once the load's physical address is generated. If the prediction is correct, the load eventually misses the cache hierarchy and waits for the ongoing speculative load request to finish. Thus, the predictor completely hides the on-chip cache hierarchy access latency from the critical path of the correctly predicted o ff chip load. The perceptron learning algorithm starts by initializing the weight of each neuron and iteratively trains the weights using each input vector from the training dataset in two steps. First, for an input vector, the perceptron network computes a binary output and the current weight values of its neurons. Second, if the computed output differs from the desired output for that input vector provided by the dataset, the weight of each neuron is updated. This iterative process is repeated until the error between the computed and desired output falls below a user specified threshold.

Finally, the article *"*Perceptron Based Prefetch Filtering", (E. Bhatia et al., ISCA '19: Proceedings of the 46th International Symposium on Computer Architecture, June 2019) refers to a perceptron-based prefetch filtering (PPF) technique to increase the coverage of the prefetches generated by an underlying prefetcher without negatively impacting accuracy. PPF enables more aggressive tuning of the underlying prefetcher, leading to increased coverage by filtering out the growing numbers of inaccurate prefetches such an aggressive tuning implies. This document also explores a range of features used to train PPF's perceptron layer to identify inaccurate prefetches.

The previous approaches have successfully applied prefetch filtering at the lower-level caches. However, they are neither agile nor responsive enough, since they are typically optimized on top of specific prefetch engines, incurring in significant area overheads, and do not produce fully accurate predictions. The present invention is aimed at solving this limitation, by proposing a novel perceptron-based off-chip predictor that combines the benefits of off-chip prediction schemes and data prefetching with adaptive filters, in a synergistic and cost-effective manner.

### SUMMARY OF THE INVENTION

To solve the problems described in the preceding section, a first object of the invention relates to a first-level perceptron (FLP) off-chip predictor communicatively connectable to a computing core and to a DRAM, wherein the core and the DRAM are communicatively connected through a multi-level cache hierarchy of (L1D, L2C, ... , LLC) levels.

Advantageously in the invention, the FLP is adapted with an FLP off-chip prediction mechanism comprising two thresholds, *τ_{low}*, and *τ_{high}* wherein, preferably, *τ_{high}* indicates a probability threshold for the corresponding load request to miss in all cache levels, and *τ_{low}* indicates a probability threshold for the corresponding load request not to miss in all or in any of the cache levels. Under said prediction mechanism, when the FLP is connected to the core and the DRAM, and the core receives a demand load request, the off-chip prediction mechanism is configured to perform the following steps:
- the FLP is consulted by the core;
- the FLP produces a confidence value used to drive the FLP off-chip prediction mechanism;
- the confidence value is compared with *τ_{high}*;
- if the confidence value greater than *τ_{high}*, the FLP issues a speculative DRAM request from the core;
- if the confidence value does not exceed *τ_{high}*, but does exceed *τ_{low}*, the demand load request is tagged as predicted off-chip, and is sent to a L1D cache;
- if the predicted off-chip request results in a miss in the L1D, the tag is read, and the speculative DRAM request is issued from the L1D cache;
- if the confidence value does not exceed *τ_{low}*, the FLP does not issue a speculative DRAM request from the core.

Compared to the known alternatives of the prior art, namely: i) a conventional FLP predictor (i.e., without a selective delay mechanism); ii) an SLP predictor alone; iii) a two-Step Predictor (TSP) consisting of an FLP without the selective delay mechanism, in combination with an SLP but without being based on FLP output, the present invention obtains a 11.5% speedup over a baseline system without off-chip prediction the baseline, improving the prior art results in at least a 37% yield ratio over a TSP, and a 396% over a conventional FLP without selective delay mechanism.

In a preferred embodiment of the invention, the FLP off-chip predictor further comprises a set of legacy features correlating the probability of a demand load request going off-chip with a history of program counters, PCs, and accessed memory regions, wherein the legacy and/or leveling features are associated with a weight table which is composed of confidence counters. More preferably, the legacy features comprise at least one feature selected from: PC and cacheline offset, PC and byte offset, PC and first access, cacheline offset and first access, last-4 load PCs.

In a preferred embodiment of the invention, the FLP predictor is further configured to be trained upon completing a memory access, and the memory block is returned to the core from the cache hierarchy. More preferably, the training comprises the following steps:
- when the demand load request comes back to the core, the FLP checks if the request was a true off-chip load request, and the request required a DRAM access;
- if the request was a true off-chip load request, the FLP predictor's corresponding weights are trained positively;
- if the request was not a true off-chip load request, the FLP predictor's corresponding weights are trained negatively.

In a preferred embodiment of the invention, the off-chip predictor further comprises a second-level perceptron (SLP) predictor, communicatively connectable to a multi-level cache hierarchy of (L1D, L2C, ..., LLC) levels through a L1D prefetcher, wherein the multi-level cache hierarchy is communicatively connected to a computing core and to a DRAM. Advantageously, the SLP is adapted with an SLP off-chip prediction mechanism comprising a prefetching threshold, *τ_{pref}*, such that, when the SLP is connected to the multi-level cache hierarchy, and the L1D prefetcher issues a prefetch request, the SLP off-chip prediction mechanism is configured to perform the following steps:
- the SLP produces an output value used to drive the SLP off-chip prediction mechanism;
- the output value is compared with *τ_{pref}*,
- if the output value exceeds *τ_{pref}*, the prefetch request is discarded;
- if the output value does not exceed *τ_{pref}*, the prefetch request is processed by the multi-level cache hierarchy.

As a result, the off-chip predictor can be also configured as a two-level perceptron (TLP) predictor, communicatively connectable to a computing core, to a DRAM, and to a multi-level cache hierarchy of (L1D, L2C, ..., LLC) levels communicatively connecting the core and the DRAM, comprising:
- a first-level perceptron (FLP) off-chip predictor according to any of the embodiments described in the present description; and
- a second-level perceptron (SLP) off-chip predictor according to any of the embodiments described in the present description.

In a preferred embodiment of the invention, the SLP further comprises a set of legacy and/or leveling features correlating the probability of a demand load request going off-chip with a history of PCs and accessed memory regions, wherein the legacy and/or leveling features are associated with a weight table which is composed of confidence counters. More preferably, the legacy features comprise at least one feature selected from: PC and cacheline offset, PC and byte offset, PC and first access, cacheline offset and first access, last-4 load PCs, and the leveling features comprise at least FLP prediction and cacheline offset.

In a preferred embodiment of the invention, the SLP predictor is further configured to be trained upon completing an L1D prefetch request, and the prefetch is served. More preferably, the training of the SLP comprises the following steps:
- when the prefetch request comes back to the core, the SLP checks if the request was a true off-chip prefetch request, implying that the request required a DRAM access;
- if the request was a true off-chip prefetch request, the SLP predictor's corresponding weights are trained positively;
- if the request was not a true off-chip prefetch request, the SLP predictor's corresponding weights are trained negatively.

Specific objects and preferred embodiments of the invention also refer to the claims submitted with the present document.

### BRIEF DESCRIPTION OF DRAWINGS

Figure 1 shows a flowchart of a first-level perceptron (FLP) according to a preferred embodiment of the invention. Diamonds indicate decision points.
Figure 2 shows a flowchart of a second-level perceptron (SLP) according to a preferred embodiment of the invention. Diamonds indicate decision points.
Figure 3 shows a diagram representing the organization and operation of a two-level perceptron (TLP) prediction mechanism according to a preferred embodiment of the invention.

### DETAILED DESCRIPTION OF THE INVENTION

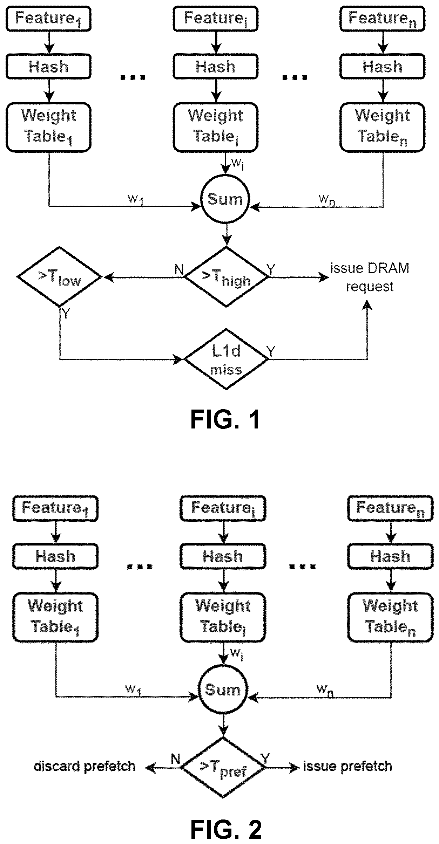

A set of three preferred embodiments of the invention, shown in Figures 1-3, will be now described for illustrative and not limiting purposes.

To remedy the deficiencies of the prior-art off-chip predictors, the present invention is advantageously designed to leverage off-chip prediction by forming effective prefetch filters for L1D, thereby improving the performance of memory-intensive workloads. With this aim, the invention proposes a two-level perceptron (TLP) predictor approach. TLP constitutes, to the knowledge of the inventors, the first hardware design using a multi-level perceptron hardware approach, and preferably comprises two connected microarchitectural perceptron predictors: a first-level predictor (FLP) and a second level predictor (SLP). FLP is a perceptron hardware predictor that employs a novel selective delay mechanism, while SLP is a perceptron that leverages off-chip prediction to drive L1D prefetch filtering using physical addresses as well as the FLP prediction as features, as described below:

### First-Level Perceptron (FLP) Predictor

FLP is a microarchitectural hashed perceptron predictor that dynamically decides whether to consume its prediction, immediately or after a certain event has taken place based on two threshold values: *τ_{high}* and *τ_{low}*. In a preferred embodiment, the FLP is proposed in the context of an off-chip prediction, although it can be applied to any perceptron approach using a selective delay method, based on said two thresholds. In the off-chip prediction context, an FLP dynamically decides whether to consume the prediction in the core, i.e., in parallel with the L1D lookup, since L1D caches are typically implemented as virtually indexed physically tagged (VIPT) structures, or upon an L1D miss. This delayed decision mechanism is driven by the two threshold values: *τ_{high}* and *τ_{low}*. Perceptron confidence values greater than *τ_{high}* indicate a high probability for the corresponding load request to miss in all cache levels, while values lower than *τ_{low}* indicate the opposite, and intermediate values indicate the need for delaying the decision. In different embodiments of the invention, the FLP can consider one or more program features (see an example in Table 1 of the present document) to predict whether a demand load request will miss in the cache hierarchy. In the context of off-chip predictions, these features correlate the probability of a demand load request going off-chip with a history of program counters (PCs) and accessed memory regions. Each FLP feature is preferably associated with a weight table which is composed of confidence counters.

**Table 1. List of example features used by the FLP and the SLP.**

| **Legacy features** | **Leveling feature** |
|---|---|
| PC ⊕ cacheline offset | FLP prediction ⊕ cacheline offset |
| PC ⊕ byte offset | |
| PC ⊕ first access | |
| Cacheline offset ⊕ first access | |
| Last-4 load PCs | |

According to Table 1, the following legacy and leveling features are described:
- PC ⊕ cacheline offset: to compute this feature, an XOR operation is performed between the program counter of the load request (or the load that triggers the prefetch), and the cache line offset of the corresponding address within its virtual page (or physical frame). This feature estimates the probability of a load (or prefetch) request to be served off-chip when a load instruction with a given PC accesses (or triggers a prefetch to) a particular cache line offset within a page. By considering this probability, the predictor accurately predicts when and where off-chip requests are expected to occur. To enable PC-based features, the predictor passes the PC of a certain demand request to the corresponding prefetch request that is generated from it, thus providing prefetch requests with PCs.
- PC ⊕ byte offset: to compute this feature, an XOR operation is performed between the program counter of the load that requests (or triggers a prefetch to) the address and the byte offset of this address within the cache line. This feature is particularly useful in predicting off-chip load requests when a program has a streaming access pattern over a linearly allocated data structure.
- PC ⊕ first access: to compute this feature, the program counter is shifted one bit to the left, adding the first access hint to the most significant bit position. The first access bit indicates whether a cache line has been recently accessed by the program or not. This feature is particularly effective to predicting off-chip requests when workloads display cyclic access patterns.
- Cache line offset ⊕ first access: this feature is similar to the PC ⊕ first access feature, with the key difference being that it determines the probability of a request going off-chip when a specific cache line offset within a page has been recently accessed by the program.
- Last-4 load PCs: this feature value is computed using a shifted-XOR operation concerning the last four program counters. It is designed to capture the execution path of the program and correlate it with the probability of observing an off-chip request whenever the program follows the same execution path. By leveraging this feature, the predictor of the invention can make more accurate predictions on when off-chip requests are likely to occur, taking into account the current execution path of the program. This allows the predictor to accurately predict off-chip accesses of workloads that exhibit repeated execution paths.
- FLP prediction ⊕ cacheline offset: this feature combines the FLP output bit of the cache block from which the prefetch request originates with the offset of the prefetched cache block in its physical memory page. The rationale of this feature is to correlate the probability of an L1D prefetch request going off-chip when a certain cache line offset is touched with the off- chip prediction decision related to the block that triggered the prefetch request. The FLP prediction ⊕ cacheline offset feature is particularly important for workloads with high correlation between off-chip load demand requests and off-chip L1D prefetch requests.

Figure 1 shows a flowchart of the FLP's operation and illustrates how the confidence value produced by the FLP is used to drive the off-chip prediction mechanism. Upon a demand load request, FLP is consulted by the core. FLP uses the selected program features to index its weight tables, then read out and sum the corresponding weights to produce a confidence value. Then the confidence value is compared to the *τ_{high}* threshold. A confidence value greater than *τ_{high}* indicates a high probability for the corresponding load request to miss in all caches. In this case, the FLP issues a speculative DRAM request from the core without waiting for the L1D lookup to resolve. However, if the confidence value does not exceed *τ_{high}* but does exceed the *τ_{low}* threshold, the load request is tagged as predicted off-chip and is sent to the L1D cache. If this request results in a miss in the L1D, the tag is read, and a speculative DRAM request is issued from the L1D. Thus, FLP avoids sending useless DRAM requests for loads that might hit in the on-chip caches. Finally, if the confidence value exceeds none of the two thresholds, the demand load request continues like a normal request, without triggering speculative DRAM access.

FLP is trained upon completing a memory access, i.e., when the memory block is returned to the core from the cache hierarchy. When the request comes back to the core, the FLP checks if the request was a true off-chip load request, i.e., if this request required a DRAM access. If the request was a true off-chip load request, the predictor's corresponding weights are trained positively. Conversely, if the request was not a true off-chip load request, the predictor's corresponding weights are trained negatively.

### Second Level Perceptron (SLP) Predictor

The SLP is a perceptron-based off-chip predictor conceived to be used in the context of L1D prefetch filtering. The SLP design is motivated by the observation that off-chip prediction can be leveraged to design effective L1D prefetch filters. SLP can be used to improve the performance of any L1D generic prefetcher since it makes no assumption regarding the L1D prefetcher design. SLP uses one or more program features to perform effective prefetch filtering at L1D.

SLP also uses program features, but these features are adapted to use physical addresses in place of virtual addresses as SLP is placed after the L1D cache. Additionally, SLP may use a new feature denoted as FLP prediction + offset. This feature combines the FLP output bit of the cache block from which the prefetch request originated with the offset of the prefetched cache block in its physical memory page. The rationale of this feature is to correlate the probability of an L1D prefetch request going off-chip when a certain cache line offset is touched with the off-chip prediction concerning the block that triggered the prefetch request. The SLP produces a binary off-chip prediction when an L1D prefetch request is issued.

Figure 2 shows a flowchart of the SLP operation. SLP is consulted when the L1D prefetcher issues a prefetch request. The confidence value is built similarly to the FLP. The output value is compared to the *τ_{pref}* threshold. If it exceeds *τ_{pref}*, the prefetch is considered as eventually requiring a DRAM access and, therefore, being useless with high probability. In this situation, the prefetch request is discarded. Conversely, if the confidence value does not exceed *τ_{pref}*, the prefetch request is processed as usual by the cache hierarchy.

SLP is trained in an analogous way as FLP. Upon the completion of an L1D prefetch request, the predictor's weights are trained positively or negatively depending on whether the prefetch request was served off-chip.

### Two Level Perceptron (TLP) Predictor

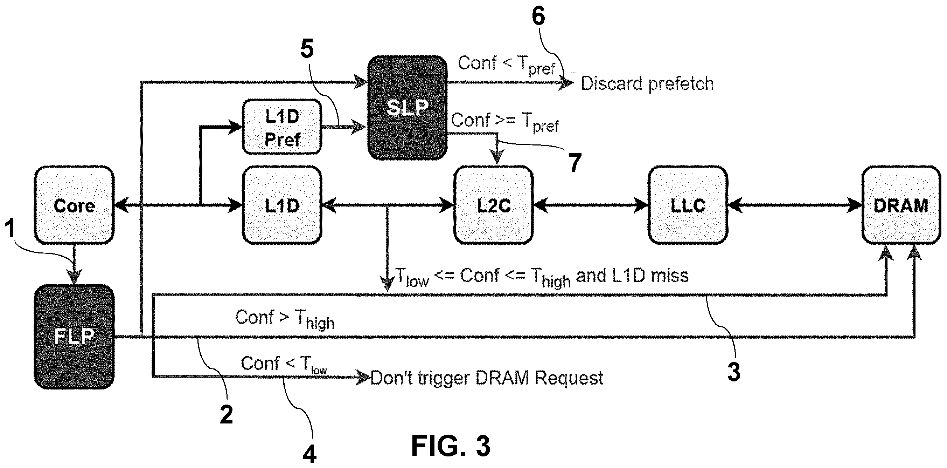

This section describes the Two-Level Perceptron (TLP) predictor, a hardware design using a multi-level perceptron approach. Figure 3 shows the design and the operation of TLP when used to combine off-chip prediction and prefetch filtering. In this example, TLP uses FLP and SLP as its fundamental building blocks.

Upon a load demand access, the core consults FLP to obtain a confidence value (referred to as 'Conf') driving the off-chip prediction (1). This prediction can give one of the three following outcomes: i) the load request is predicted to be off-chip with high confidence (Conf *> τ_{high}*), thus a speculative DRAM request is thrown from the core (2) besides the regular load demand access; ii) the load request is predicted to be off-chip with low confidence (*τ_{low}* ≤ Conf ≤ *τ_{high}*), thus the speculative DRAM request will be thrown only if the load misses in the L1D (3); iii) the load request is predicted to be on-chip; therefore no additional action is taken (4) besides triggering the regular demand access. Metadata relative to the prediction (hashed PC, history of last load PCs, and perceptron confidence value) are stored in the matching Load Queue entry for later training and an off-chip prediction tag is set in the load request thrown to the cache hierarchy depending on the FLP prediction.

SLP is consulted upon L1D prefetch requests (5). To make a prediction, SLP takes as input the metadata attached to the prefetch request and the off-chip prediction tag attached to the demand load request from which the prefetch request originates. This information is used to produce an off-chip Conf prediction specific to L1D prefetch request. This prediction can result in two possible outcomes: i) the prefetch request is predicted to be off-chip (Conf ≤ *τ_{pref}*) and the prefetch request is discarded (6), and ii) the prefetch request is predicted to be on-chip (Conf > *τ_{pref}*) and the prefetch request is processed as usual by the cache hierarchy (7). Analogously to FLP, SLP stores metadata relative to its prediction in the L1D miss status/handler register (MSHR) entries for later training.

The training routines of the FLP and the SLP are triggered upon completion of the corresponding requests, i.e., for FLP when the load request returns to the core and SLP when the prefetch request is served.

It can be shown that the known alternatives of the prior art, namely: i) a conventional FLP predictor (i.e., without a selective delay mechanism); ii) an SLP predictor alone; iii) a two-Step Predictor (TSP) consisting of an FLP without the selective delay mechanism, in combination with an SLP but without being based on FLP output, obtain, respectively, 2.9%, 6.9%, 8.4% geometric mean speedups over a baseline system without off-chip prediction. Compared to these known alternatives, the claimed proposal provides a 11.5% speedup over the baseline, thus improving the prior art results in at least a 37% yield ratio over the TSP, and a 396% over the conventional FLP without selective delay mechanism.

## Claims

1. A first-level perceptron, FLP, off-chip predictor communicatively connectable to a computing core and to a DRAM, wherein the core and the DRAM are communicatively connected through a multi-level cache hierarchy of levels L1D, L2C, ..., LLC, and
**characterized in that** the FLP is adapted with an FLP off-chip prediction mechanism comprising two thresholds, *τ_{low}* and *τ_{high}*, such that, when the FLP is connected to the core and the DRAM, and the core receives a demand load request, the off-chip prediction mechanism is configured to perform the following steps:
- the FLP is consulted by the core;
- the FLP produces a confidence value used to drive the FLP off-chip prediction mechanism;
- the confidence value is compared with *τ_{high}*;
- if the confidence value greater than *τ_{high}*, the FLP issues a speculative DRAM request from the core;
- if the confidence value does not exceed *τ_{high}*, but does exceed *τ_{low}*, the demand load request is tagged as predicted off-chip, and is sent to a L1D cache;
- if the predicted off-chip request results in a miss in the L1D, the tag is read, and the speculative DRAM request is issued from the L1D cache;
- if the confidence value does not exceed *τ_{low}*, the FLP does not issue a speculative DRAM request from the core.

2. FLP off-chip predictor according to the preceding claim, wherein *τ_{high}* indicates a probability threshold for the corresponding load request to miss in all cache levels, and *τ_{low}* indicates a probability threshold for the corresponding load request not to miss in all or in any of the cache levels.

3. FLP off-chip predictor according to any of the preceding claims, further comprising a set of legacy features correlating the probability of a demand load request going off-chip with a history of program counters, PCs, and accessed memory regions, wherein the legacy and/or leveling features are associated with a weight table which is composed of confidence counters.

4. FLP off-chip predictor according to the preceding claim, wherein the legacy features comprise at least one feature selected from: PC and cacheline offset, PC and byte offset, PC and first access, cacheline offset and first access, last-4 load PCs.

5. FLP off-chip predictor according to any of the preceding claims, wherein the FLP predictor is further configured to be trained upon completing a memory access, and the memory block is returned to the core from the cache hierarchy.

6. FLP off-chip predictor according to the preceding claim, wherein the training comprises the following steps:
- when the demand load request comes back to the core, the FLP checks if the request was a true off-chip load request, and the request requires a DRAM access;
- if the request is a true off-chip load request, the FLP predictor's corresponding weights are trained positively;
- if the request was not a true off-chip load request, the FLP predictor's corresponding weights are trained negatively.

7. A two-level perceptron (TLP) off-chip predictor, communicatively connectable to a computing core, to a DRAM, and to a multi-level cache hierarchy of levels L1D, L2C, ..., LLC communicatively connecting the core and the DRAM, comprising:
- a first-level perceptron (FLP) off-chip predictor according to any of the preceding claims; and
- a second-level perceptron (SLP) off-chip predictor communicatively connectable to a multi-level cache hierarchy of levels L1D, L2C, ..., LLC through a L1D prefetcher, wherein the multi-level cache hierarchy is communicatively connected to a computing core and to a DRAM, and
wherein the SLP is adapted with an SLP off-chip prediction mechanism comprising a prefetching threshold, *τ_{pref}*, such that, when the SLP is connected to the multi-level cache hierarchy, and the L1D prefetcher issues a prefetch request, the SLP off-chip prediction mechanism is configured to perform the following steps:
a) the SLP produces an output value used to drive the SLP off-chip prediction mechanism;
b) the output value is compared with *τ_{pref}*;
c) if the output value exceeds *τ_{pref}*, the prefetch request is discarded;
d) if the output value does not exceed *τ_{pref}*, the prefetch request is processed by the multi-level cache hierarchy.

8. TLP off-chip predictor according to any of the preceding claims, wherein the SLP further comprises a set of legacy and/or leveling features correlating the probability of a demand load request going off-chip with a history of PCs and accessed memory regions, wherein the legacy and/or leveling features are associated with a weight table which is composed of confidence counters.

9. TLP off-chip predictor according to the preceding claim, wherein the legacy features comprise at least one feature selected from: PC and cacheline offset, PC and byte offset, PC and first access, cacheline offset and first access, last-4 load PCs.

10. TLP off-chip predictor according to any of claims 8-9, wherein the leveling features comprise at least FLP prediction and cacheline offset.

11. TLP off-chip predictor according to any of claims 7-10, wherein the SLP predictor is further configured to be trained upon completing an L1D prefetch request, and the prefetch is served.

12. TLP off-chip predictor according to the preceding claim, wherein the training of the SLP comprises the following steps:
- when the prefetch request comes back to the core, the SLP checks if the request was a true off-chip prediction request, implying that the request requires a DRAM access;
- if the request is a true off-chip prefetch request, the SLP predictor's corresponding weights are trained positively;
- if the request is not a true off-chip prefetch request, the SLP predictor's corresponding weights are trained negatively.
